# EUROPÄISCHE PATENTSCHRIFT

(11) **EP 4 256 318 B1**
(45) Veröffentlichungstag und Bekanntmachung des Hinweises auf die Patenterteilung: **10.09.2025**
(21) Anmeldenummer: 21820097.0
(22) Anmeldetag: 01.12.2021
(51) Int. Cl.: G01N 29/04, B05B 1/34, G01N 29/28, G01N 29/32

(54) **ULTRASCHALL-PRÜFVORRICHTUNG**
ULTRASONIC TESTING DEVICE
DISPOSITIF DE TEST À ULTRASONS

(30) Priorität: 01.12.2020 AT 510482020
(43) Veröffentlichungstag der Anmeldung: 11.10.2023
(73) Patentinhaber: FACC AG, 4910 Ried im Innkreis (AT)
(72) Erfinder: LENGLACHNER, Wolfgang, 5280 Braunau am Inn (AT)
(74) Vertreter: SONN Patentanwälte GmbH & Co KG
(86) Internationale Anmeldenummer: PCT/AT2021/060456
(87) Internationale Veröffentlichungsnummer: WO 2022/115893

(56) Entgegenhaltungen:
- GB-A- 1 419 118
- GB-A- 191 514 014
- JP-U- S57 142 358
- US-A- 3 486 700
- US-A- 4 393 991
- US-A1- 2004 144 867

## Beschreibung

Die Erfindung betrifft eine Ultraschall-Prüfvorrichtung nach dem Oberbegriff von Anspruch 1.

Weiters betrifft die Erfindung ein Verfahren zum zerstörungsfreien Prüfen eines Bauteils, insbesondere eines Faser-Kunststoff-Verbund-Bauteils.

Die US 4 393 991 A zeigt eine Ultraschall-Düse gemäß dem Oberbegriff von Anspruch 1.

Aus der JP S57142358 U ist eine Ultraschall-Prüfvorrichtung mit einem Ultraschallprüfkopf und einer Flüssigkeitsdüse bekannt, bei welcher die Flüssigkeit der Flüssigkeitsdüse radial über eine Versorgungsleitung zugeführt wird, etwa senkrecht zur Vorderseite des Ultraschallprüfkopfs strömt und die Düse über einen Auslass verlässt. Bei diesem Stand der Technik sind weiters Führungsrippen vorgesehen, welche jedoch ausschließlich entlang der Flüssigkeitszuführung erstreckt sind. Diese Führungsrippen enden außerhalb des Prüfungskopfs und erstrecken sich daher nicht bis vor den Prüfkopf. Somit ermöglicht es dieser Stand der Technik lediglich, Turbulenzen der Wasserzuführung zu vermindern. Die Strömung vor dem Prüfkopf wird nicht verbessert.

In den US 3,486,700 A und US 2004/144867 A1 werden andersartige Düsen beschrieben, welche auch nicht kompatibel mit Ultraschall-Prüfvorrichtungen, wie in der JP S57142358 U gezeigt, kompatibel wären.

Wie weiters in der EP 0 119 096 A2 beschrieben wird, werden Ultraschallsonden zur zerstörungsfreien Prüfung von Materialien und Bauteilen eingesetzt. So können beispielsweise Inhomogenitäten und Defekte innerhalb der Bauteile lokalisiert werden. Der Ultraschall-Transducer sendet Ultraschallwellen aus, die durch einen Flüssigkeitsstrahl auf das Bauteil übertragen werden. Der Flüssigkeitsstrahl wird durch eine Flüssigkeitsdüse geformt, welche vor dem Transducer am Gehäuse der Ultraschallsonde befestigt ist. Je nach Ausführung können die reflektierten Ultraschallwellen an demselben Ultraschall-Transducer empfangen werden ("puls echo mode") oder die Ultraschallwellen treten durch das Bauteil durch und werden über einen zweiten Flüssigkeitsstrahl einem Empfänger-Transducer zugeführt ("through transmission mode"). Die eintreffenden Wellen werden in ein elektrisches Signal umgewandelt, das elektronisch ausgewertet wird. Bei diesem Stand der Technik wird zudem das Problem angesprochen, dass der Wasserfluss innerhalb der Ultraschallsonde verschiedenen Störungen unterworfen ist, die das Ultraschallsignal beeinträchtigen können. Aus diesem Grund schlägt die EP 0 119 096 A2 vor, das Gehäuse der Ultraschallsonde mit einer Vielzahl in Umfangsrichtung voneinander beabstandeter, in Strömungsrichtung erstreckter Kanäle auszustatten, über welche die Flüssigkeit in Richtung der Flüssigkeitsdüse geleitet wird. Diese Kanäle sollen dabei helfen, eine geradlinige und laminare Strömung der Flüssigkeit zu erreichen.

In der Praxis hat sich jedoch gezeigt, dass dieser Ansatz bestenfalls den laminaren Charakter der Strömung im stationären Zustand der Ultraschallsonde aufrechterhalten kann. Die Strömung vor dem Transducer wird kaum verbessert. Bei der Prüfung von Bauteilen mit dreidimensionalen Geometrien muss die Ultraschallsonde außerdem komplizierte Bewegungen, insbesondere Rotationen, durchführen. Beim Stand der Technik müssen diese Rotationen sehr langsam ausgeführt werden, um Turbulenzen und die daraus resultierenden Verschlechterungen des Signals zu vermeiden. Dieses Problem wird dadurch verstärkt, dass die Prüfung von engen Bauteilkonturen kurze Ultraschallsonden verlangt, die besonders anfällig für Turbulenzen aufgrund von Rotationen sind. Die Flüssigkeitskanäle der EP 0 119 096 A2 verlängern hingegen sogar die Ultraschallsonde.

Die GB 1 419 118 A beschreibt eine Ultraschallprüfvorrichtung, bei welcher eine laminare Strömung durch parallele, in Strömungsrichtung erstreckte Röhren im Strömungsquerschnitt verbessert werden soll. Die Röhren sind, in Strömungsrichtung gesehen, vor einer Düse für den Wasseraustritt angeordnet. Dieser Stand der Technik bringt im Wesentlichen dieselben Nachteile wie die EP 0 119 096 A2 mit sich. Durch die Rohre wird die Länge der Ultraschallsonde erhöht. Weiters kann nur der Wasserfluss im statischen Zustand laminar gehalten werden.

Demgegenüber besteht die Aufgabe der vorliegenden Erfindung darin, zumindest einzelne Nachteile des Standes der Technik zu lindern bzw. zu beheben. Die Erfindung setzt sich bevorzugt zum Ziel, eine effiziente Prüfung von Bauteilen mit dreidimensionaler Geometrie zu ermöglichen.

Diese Aufgabe wird durch eine Ultraschall-Prüfvorrichtung mit den Merkmalen von Anspruch 1 sowie ein Verfahren nach Anspruch 10 gelöst. Bevorzugte Ausführungsformen der Erfindung sind in den abhängigen Ansprüchen angegeben.

Erfindungsgemäß weist die Flüssigkeitsdüse zumindest eine Flüssigkeitsführungsrippe auf, welche von der sich verjüngenden Innenfläche der Flüssigkeitsdüse in den Schallraum vor dem Ultraschallprüfkopf nach innen absteht.

Somit ragt zumindest eine Flüssigkeitsführungsrippe von der glatten, erhebungsfreien Innenfläche in das Innere der Flüssigkeitsdüse. Dadurch kann die Flüssigkeitsströmung nicht nur im statischen Zustand der Ultraschall-Prüfvorrichtung, sondern auch während einer Bewegung der Ultraschall-Prüfvorrichtung weitgehend laminar gehalten werden. Somit können Bewegungen der Ultraschall-Prüfvorrichtung mit höherer Geschwindigkeit als beim Stand der Technik durchgeführt werden, ohne das Messsignal gravierend zu beeinträchtigen. Vorteilhafterweise können so die Ergebnisse der Bauteil-Prüfung wesentlich verbessert und die Prüfung beschleunigt werden. Da sich die Flüssigkeitsführungsrippe entlang der nach vorne zusammenlaufenden Innenfläche der Flüssigkeitsdüse erstreckt, kann die Länge der Flüssigkeitsdüse, d.h. ihre axiale Erstreckung, kurz gehalten werden. Dies ermöglicht die Prüfung von engen und stark gekrümmten Bauteilen. Aufgrund der Flüssigkeitsführungsrippe kann die Prüfung selbst bei komplizierten, dreidimensionalen Bauteilgeometrien zuverlässig und präzise während der nötigen Bewegungen und Drehungen der Flüssigkeitsdüse durchgeführt werden. Weiters ist von Vorteil, wenn die Fließgeschwindigkeit der Flüssigkeit, insbesondere Wasser, bis zum Flüssigkeitsauslass im Wesentlichen konstant gehalten werden kann.

Um unerwünschte Reflexionen des Ultraschall-Signals zu vermeiden, ist es günstig, wenn die Flüssigkeitsführungsrippe von der sich verjüngenden Innenfläche bis in einen Randbereich an der Vorderseite des Ultraschallprüfkopfes reicht, wobei ein Zentralbereich an der Vorderseite des Ultraschallprüfkopfes frei von der Flüssigkeitsführungsrippe ist. Demnach endet die Flüssigkeitsführungsrippe in radialer Richtung gesehen im Randbereich des Schallraumes vor dem Ultraschallprüfkopf und ragt nicht in den Zentralbereich des Schallraumes vor dem Ultraschallprüfkopf hinein, welcher sich um die zentrale Mittelachse der Flüssigkeitsdüse erstreckt. Demgegenüber erstreckt sich die Rippe beim Stand der Technik gemäß JP S57142358 U nicht in den Schallraum vor dem Prüfkopf.

Um die laminare Flüssigkeitsströmung entlang der in axialer Richtung zum Flüssigkeitsauslass hin zusammenlaufenden Innenfläche zu gewährleisten, weist die Flüssigkeitsdüse mehrere Flüssigkeitsführungsrippen an der sich verjüngenden Innenfläche auf.

Um das Messsignal durch die Flüssigkeitsführungsrippen möglichst wenig zu beeinträchtigen, ist es von Vorteil, wenn die inneren Längskanten gegenüberliegender Flüssigkeitsführungsrippen in einem radialen Abstand zueinander angeordnet sind, so dass die Flüssigkeitsdüse einen von Flüssigkeitsführungsrippen freien Zentralbereich aufweist. Somit definieren die Flüssigkeitsführungsrippen keine einzelnen, geschlossenen Strömungskanäle, sondern hängen über den offenen Zentralbereich zusammen.

Wenn die Flüssigkeitsführungsrippen in regelmäßigen Winkelabständen, in Umfangsrichtung der Innenfläche gesehen, an der sich verjüngenden Innenfläche der Flüssigkeitsdüse angeordnet sind, kann die Flüssigkeitsströmung bei Verschiebungen und Drehungen in unterschiedliche Richtungen und Achsen im Wesentlichen laminar gehalten werden.

Weiters nimmt die Höhe der Flüssigkeitsführungsrippen in Richtung zum Flüssigkeitsauslass hin ab. Somit sind die Flüssigkeitsführungsrippen umso höher, je breiter der Strömungsquerschnitt innerhalb der zum Flüssigkeitsauslass hin verjüngten Innenfläche der Flüssigkeitsdüse ist. Diese Ausführung hat sich als besonders wirksam erwiesen, die laminare Strömung zu verbessern, ohne das Ultraschallsignal wesentlich zu beeinträchtigen.

Da die inneren Längskanten der Flüssigkeitsführungsrippen im Wesentlichen parallel zueinander verlaufen, wird ein im Wesentlichen zylindrischer Zentralbereich geschaffen, in dem die Flüssigkeit ungehindert strömen kann. Dadurch werden die Strömungsverhältnisse und das Ultraschallsignal optimiert. Diese Ausführung hat sich als besonders wirksam erwiesen, um Nebenkäulen ("side lobes") des Schallfeldes zu reduzieren bzw. zu eliminieren.

Bei einer alternativen Ausführung verringert sich der radiale Abstand zwischen gegenüberliegenden Flüssigkeitsführungsrippen in axialer Richtung zum Flüssigkeitsauslass hin. Somit ragen die Flüssigkeitsrippen bei dieser Ausführung auf Seite des Ultraschallprüfkopfes weniger weit nach innen. Diese Ausführung kann bei einem Mehrfrequenz-Ultraschallprüfkopf vorgesehen sein, um die Nebenkäulen des Schallfeldes zu erhalten.

Bei einer bevorzugten Ausführungsform ist die sich verjüngende Innenfläche der Flüssigkeitsdüse angrenzend an den Flüssigkeitsauslass von Flüssigkeitsführungsrippen frei. Da der Strömungsquerschnitt nahe dem Flüssigkeitsauslass vergleichsweise klein ist, kann in diesem Abschnitt auf die Flüssigkeitsführungsrippen verzichtet werden.

Um die Strömungsverhältnisse zu optimieren, ist die Innenfläche der Flüssigkeitsdüse bei einer bevorzugten Ausführungsform entsprechend eines Spline-Polynoms 3. bis 5**.** Grades verjüngt. Diese Ausführung hat sich als besonders günstig erwiesen, eine laminare Strömung im stillstehenden Zustand der Flüssigkeitsdüse zu erreichen. Aufgrund der Flüssigkeitsführungsrippe kann diese laminare Flüssigkeitsströmung auch bei Verschiebungen und Drehungen der Flüssigkeitsdüse beibehalten werden.

Zur Prüfung enger oder stark gekrümmter Bereiche eines Bauteils ist es günstig, wenn die Flüssigkeitsdüse eine axiale Erstreckung von kleiner als 60 mm von der Mitte des Ultraschallprüfkopfes bis zum Flüssigkeitsauslass aufweist. Bei einer bevorzugten Ausführung ist ein Antrieb zum Bewegen der Flüssigkeitsdüse, insbesondere zum Rotieren der Flüssigkeitsdüse um ihre Längsachse und/oder eine senkrecht dazu verlaufende Querachse, vorgesehen.

Bei einer bevorzugten Ausführungsform ist eine Flüssigkeitszufuhr vorgesehen, mit welcher eine Flüssigkeitsströmung, insbesondere Wasser, einem ringförmigen Zulauf zwischen einem Aufnahmegehäuse und der Außenseite der Flüssigkeitsdüse zugeführt, mit einem Umlenkring umgelenkt und zu dem Flüssigkeitseinlass der Flüssigkeitsdüse geführt wird. Der Flüssigkeitseinlass erstreckt sich ringförmig an der Rückseite der Flüssigkeitsdüse. Durch den ringförmigen Flüssigkeitseinlass wird der Zufluss der Flüssigkeitsströmung laminar gestaltet.

Bevorzugt befindet sich das (in Strömungsrichtung der Flüssigkeit gesehen) hintere Ende der Flüssigkeitsführungsrippe innerhalb des Flüssigkeitseinlasses. Vom hinteren Ende erstreckt sich die Flüssigkeitsführungsrippe (in Strömungsrichtung der Flüssigkeit gesehen) nach vorne bis in den Schallraum vor dem Prüfkopf.

Bei einer bevorzugten Anwendung ist eine Prüfanlage mit einem Handhabungselement, insbesondere mit einem Roboterarm, vorgesehen, an welchem ein Werkzeug mit einer Ultraschall-Prüfvorrichtung nach einer der oben beschriebenen Ausführungsformen angebracht ist.

Bei einer bevorzugten Ausführung ist eine weitere Ultraschall-Prüfvorrichtung mit einem weiteren Ultraschallprüfkopf und einer weiteren Flüssigkeitsdüse zum Empfangen von durch das Bauteil durchtretenden Ultraschallwellen vorgesehen. Die weitere Ultraschall-Prüfvorrichtung ist bevorzugt wie die Ultraschall-Prüfvorrichtung nach einer der oben erläuterten Ausführungsformen ausgeführt. Der Ultraschallprüfkopf sendet die Ultraschallwellen; der weitere Ultraschallprüfkopf empfängt die Ultraschallwellen an der gegenüberliegenden Seite des Bauteils. Bei dieser Ausführung sind der Ultraschallprüfkopf und der weitere Ultraschallprüfkopf über die Flüssigkeitsstrahlen miteinander gekoppelt, welche über die Flüssigkeitsdüsen auf gegenüberliegende Seiten des Bauteils aufgebracht werden. Somit kann eine Durchschallung des Bauteils durchgeführt werden.

Je nach Ausführung kann die weitere Ultraschall-Prüfvorrichtung an einem weiteren Handhabungselement oder, insbesondere mit Hilfe eines Gabelelements, an dem Handhabungselement angeordnet sein.

Bei einer weiteren Ausführungsform ist die Ultraschall-Prüfvorrichtung zum Empfangen von Reflexionsschallwellen eingerichtet. Somit kann ein Reflexionsschallverfahren durchgeführt werden. Diese Ausführung kann zusätzlich oder alternativ zur Durchschallung mit Hilfe der weiteren Ultraschall-Prüfvorrichtung vorgesehen sein.

Zur Durchführung eines erfindungsgemäßen Verfahrens zum nichtzerstörenden Prüfen eines Bauteils, insbesondere eines Faser-Kunststoff-Verbund-Bauteils, werden daher die folgenden Schritte (nicht unbedingt in der angegebenen Reihenfolge) durchgeführt:
Vorsehen der Ultraschall-Prüfvorrichtung in einer der oben beschriebenen Ausführungsvarianten,
Erzeugen von Ultraschallwellen mit dem Ultraschallprüfkopf,
Zuführen einer Flüssigkeitsströmung in die Flüssigkeitsdüse über den Flüssigkeitseinlass,
Leiten der Flüssigkeitsströmung entlang der Innenfläche der Flüssigkeitsdüse bis zum Flüssigkeitsauslass, wobei die Flüssigkeitsströmung mit Hilfe der Flüssigkeitsführungsrippe geführt wird.

Bevorzugt umfasst das Verfahren zudem den Schritt:
Vorsehen einer weiteren Ultraschall-Prüfvorrichtung, welche bevorzugt wie die Ultraschall-Prüfvorrichtung in einer der obigen Varianten ausgeführt ist;
Empfangen von durch das Bauteil durchtretenden Ultraschallwellen mit einem weiteren Ultraschallprüfkopf der weiteren Ultraschall-Prüfvorrichtung.

Bei dieser Ausführung treten die Ultraschallwellen durch das Bauteil durch und werden über einen zweiten Flüssigkeitsstrahl dem weiteren Ultraschallprüfkopf zugeführt ("through transmission mode").

Alternativ oder zusätzlich können mit der Ultraschall-Prüfvorrichtung die im Bauteil reflektierten Ultraschallwellen erfasst werden.

Das Verfahren zum zerstörungsfreien Prüfen des Bauteils umfasst bei einer bevorzugten Ausführungsform zudem den Schritt:
Drehen der Flüssigkeitsdüse, insbesondere um ihre eigene Achse, während dem Leiten der Flüssigkeitsströmung entlang der Innenfläche der Flüssigkeitsdüse bis zum Flüssigkeitsauslass, so dass die Flüssigkeitsströmung über die Flüssigkeitsführungsrippe bei der Drehbewegung mitgenommen wird.

Die Erfindung wird im Folgenden anhand eines bevorzugten Ausführungsbeispiels weiter erläutert, das in den Zeichnungen dargestellt ist.

Fig. 1 zeigt eine Prüfanlage zum nichtzerstörenden Prüfen eines Faser-Kunststoff-Verbund-Bauteils.

Fig. 2A bis 2C zeigen eine Wechselvorrichtung der Prüfanlage gemäß Fig. 1 mit einem Wechseladapter und einem daran montierten Werkzeug zum nichtzerstörenden Prüfen des Faser-Kunststoff-Verbund-Bauteils, wobei das Werkzeug eine erfindungsgemäße Ultraschall-Prüfvorrichtung aufweist.

Fig. 3, Fig. 4 und Fig. 5 zeigen einen Werkzeugkopf des Werkzeuges gemäß Fig. 2A bis Fig. 2C, welchem eine entsprechende Ultraschallsonde mit einem Empfänger-Transducer gegenüberliegt.

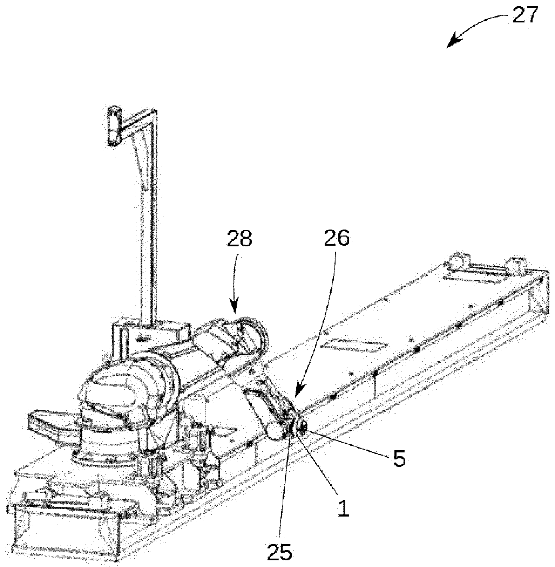

Fig. 1 zeigt eine Prüfanlage 27 zum nichtzerstörenden Prüfen eines Faser-Kunststoff-Verbund-Bauteils. Die Prüfanlage weist eine Wechselvorrichtung 26, eine Adapterplatte 25 und ein Handhabungselement 28 auf, das in der gezeigten Ausführung als Roboterarm ausgeführt ist. Die Adapterplatte 25 ist an der einen Seite an dem Handhabungselement 28 montiert. An der anderen Seite der Adapterplatte 25 ist die Wechselvorrichtung 26 lösbar angeschlossen.

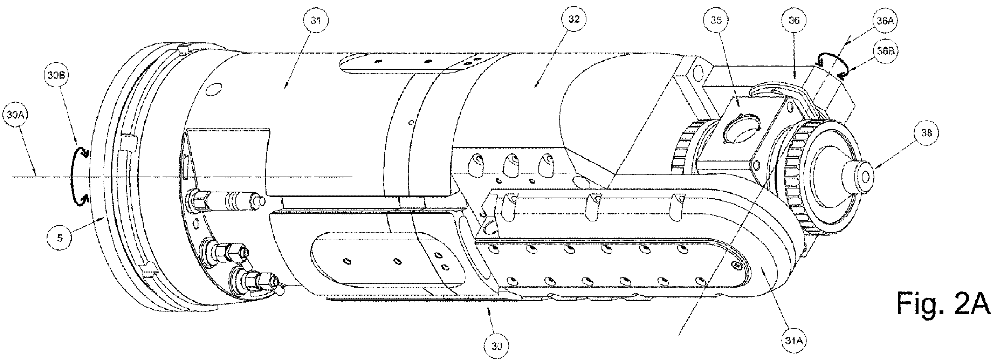

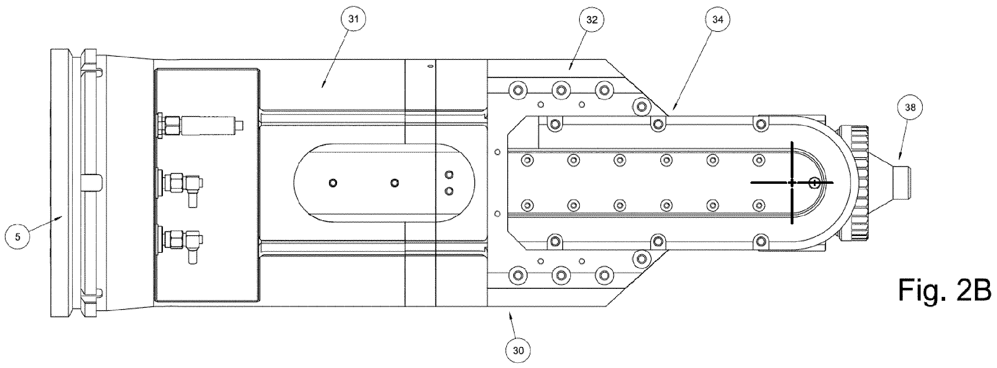

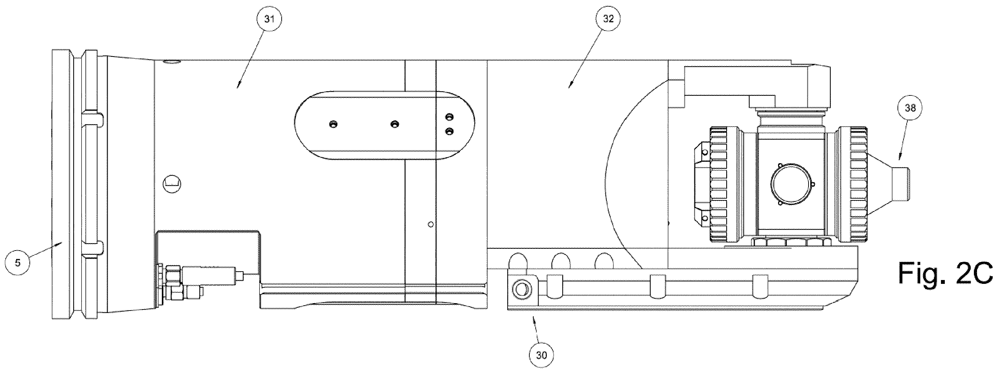

Wie aus Fig. 1 sowie im Detail aus Fig. 2A bis 2C ersichtlich, weist die Wechselvorrichtung 26 einen Wechseladapter 5 auf, an dem ein (in Fig. 1 nicht ersichtliches) Werkzeug 30 zum nichtzerstörenden Prüfen des Faser-Kunststoff-Verbund-Bauteils montiert ist. Das Werkzeug 30 weist ein koaxial an den Wechseladapter 5 angrenzendes zylinderförmiges Motorgehäuse 31 auf, das mit dem Wechseladapter 5 drehfest und lösbar verbunden ist. In dem Motorgehäuse 31 ist ein Motor, insbesondere ein Servomotor, angeordnet. An einer Seite des Motorgehäuses 31, die im montierten Zustand des Werkzeugs 30 dem Wechseladapter 5 gegenüberliegt, weist das Werkzeug 30 ein zylinderförmiges Getriebegehäuse 32 auf, das koaxial zum zylinderförmigen Motorgehäuse 31 angeordnet ist. In dem Getriebegehäuse 32 ist ein Getriebe angeordnet, das mit dem Servomotor verbunden ist und vom Servomotor erzeugte Drehmomente und/oder Drehzahlen umwandelt. An einer dem Motorgehäuse 31 gegenüberliegenden Seite 34 des Getriebegehäuses 32 ist ein Werkzeugkopf 35 angeordnet, der an einer am Getriebegehäuse 32 befestigten Halterung 36 um eine Querachse 36A drehbar angeordnet ist. Mithilfe des Servomotors kann der Werkzeugkopf 35 gegenüber der Halterung 36 um die Querachse 36A gedreht werden (vgl. Pfeil 36B in Fig. 2A). In der gezeigten Ausführung wird die Kraft des Motors über einen Zahnriemen in einem Zahnriemengehäuse 31A auf den Werkzeugkopf 35 übertragen.

Der Werkzeugkopf 35 weist einen Ultraschallprüfkopf 37 und eine Flüssigkeitsdüse 38 auf, mit welcher ein Wasserstrahl auf das Bauteil gerichtet wird.

Das Werkzeug 30 kann mit einem weiteren Antrieb, beispielsweise des Handhabungselements 28, um seine Längsachse 30A gedreht werden, wie in Fig. 2A mit einem Pfeil 30B veranschaulicht ist. Somit kann die Flüssigkeitsdüse 38 um ihre Längs- bzw. Mittelachse 46 gedreht werden, wenn die Querachse 36A auf 0° eingestellt ist, so dass die Längsachse 46 der Flüssigkeitsdüse 38 parallel zur Längsachse 30A des Werkzeugs 30 verläuft. Die Rotationen um die Längsachse 30A und die Querachse 36A können miteinander auch gleichzeitig durchgeführt werden.

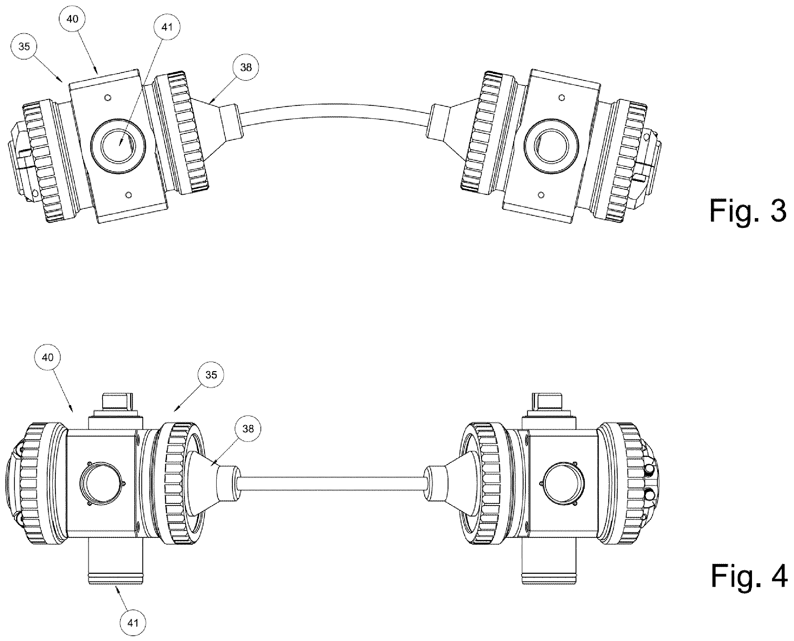

Fig. 3 bis 5 zeigen eine erfindungsgemäße Ausführung des Werkzeugkopfes 35, welcher in der gezeigten Ausführung ein Aufnahmegehäuse 40 aufweist, an dem der Ultraschallprüfkopf 37 und die Flüssigkeitsdüse 38 montiert sind. In der Zeichnung ist zudem eine dem Werkzeugkopf 35 entsprechende Ultraschallsonde mit einem Empfänger-Transducer 49 zu sehen, mit welchem durch das (nicht gezeigte) Bauteil durchtretende Ultraschallwellen empfangen werden. Die eintreffenden Wellen werden in ein elektrisches Signal umgewandelt, das elektronisch ausgewertet wird.

Der Werkzeugkopf 35 weist eine Flüssigkeitszufuhr 41 zur Zufuhr von Flüssigkeit über die Lagerung des Aufnahmegehäuses 40 auf. Mit der Wasserzufuhr 41 wird eine Flüssigkeitsströmung, insbesondere Wasser, einem ringförmigen Zulauf zwischen dem Aufnahmegehäuse 40 und der Außenseite der Flüssigkeitsdüse 38 zugeführt, mit einem Umlenkring umgelenkt und zu einem Flüssigkeitseinlass 42 der Flüssigkeitsdüse 38 geführt. Der Flüssigkeitseinlass 42 erstreckt sich ringförmig an der Rückseite der Flüssigkeitsdüse 38. Durch den ringförmigen Flüssigkeitseinlass 42 wird der Zufluss der Flüssigkeitsströmung laminar gestaltet. Die Flüssigkeitsdüse 38 weist am vorderen Ende, an der vom Ultraschallprüfkopf bzw. Transducer 37 abgewandten Seite einen Flüssigkeitsauslass 43 auf, mit dem die Flüssigkeitsströmung bei der zerstörungsfreien Ultraschall-Prüfung auf das Bauteil gerichtet wird.

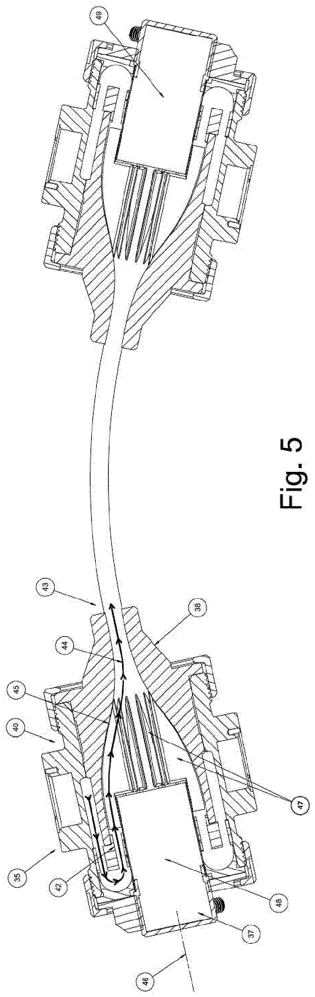

Die Flüssigkeitsströmung innerhalb der Flüssigkeitsdüse 38 ist in Fig. 5 mit einer Linie 44 veranschaulicht.

Wie aus Fig. 5 ersichtlich, wird der Strömungsraum innerhalb der Flüssigkeitsdüse 38, auch als Spritzdüse oder "squirter nozzle" bezeichnet, durch eine glatte Innenfläche 45 begrenzt, welche vom Flüssigkeitseinlass 42 bis zum Flüssigkeitsauslass 43 kontinuierlich zusammenläuft. In der gezeigten Ausführung ist die Innenfläche 45 der Flüssigkeitsdüse 38 entsprechend eines Spline-Polynoms **3.** bis 5. Grades gekrümmt. Somit verringert sich der Strömungsquerschnitt der Flüssigkeitsströmung innerhalb der Flüssigkeitsdüse 38 in Richtung der Flüssigkeitsströmung. Die Innenfläche 45 ist rotationssymmetrisch bezüglich einer Mittelachse 46 der Flüssigkeitsdüse 38 ausgebildet. Die Richtungsangaben, wie "axial", "radial", beziehen sich auf die Mittelachse 46 der Flüssigkeitsdüse 38.

Wie aus Fig. 5 weiters ersichtlich, weist die Flüssigkeitsdüse 38 mehrere Flüssigkeitsführungsrippen bzw. -vorsprünge 47 auf, welche von der Innenfläche 45 der Flüssigkeitsdüse 38 in radialer Richtung nach innen, zur Mittelachse 46 hin vorragen und sich in axialer Richtung erstrecken. Die inneren Längskanten 48 der Flüssigkeitsführungsrippen 47 enden an einem, in radialer Richtung gesehen, äußeren Randbereich des Strömungsraumes vor dem Ultraschallprüfkopf 37. Somit ist der Zentralbereich um die Mittelachse 46 frei von Flüssigkeitsführungsrippen 47, so dass sich das Ultraschallsignal im Zentralbereich frei ausbreiten kann und störende Reflexionen verhindert werden. Die Flüssigkeitsführungsrippen 47 sind in regelmäßigen Winkelabständen in Umfangsrichtung gesehen an der Innenfläche 45 der Flüssigkeitsdüse 38 angeordnet. Es können zumindest vier, bevorzugt zumindest sechs, besonders bevorzugt zumindest acht, insbesondere zumindest zehn Flüssigkeitsführungsrippen 47 vorgesehen sein.

Wie aus Fig. 5 weiters ersichtlich, nimmt die Höhe der Flüssigkeitsführungsrippen 47, d.h**.** ihre radiale Erstreckung, in axialer Richtung zum Flüssigkeitsauslass 43 hin ab, so dass die inneren Längskanten 48 der Flüssigkeitsführungsrippen 47 im Wesentlichen parallel zueinander verlaufen. Die Flüssigkeitsführungsrippen 47 laufen vor dem Flüssigkeitsauslass 43 aus, so dass der Abschnitt benachbart des Flüssigkeitsauslasses 43 frei von Flüssigkeitsführungsrippen 47 ist.

## Patentansprüche

1. Ultraschall-Prüfvorrichtung zum zerstörungsfreien Prüfen eines Bauteils, insbesondere eines Faser-Kunststoff-Verbund-Bauteils, aufweisend:
einen Ultraschallprüfkopf (37),
eine Flüssigkeitsdüse (38) mit einem Flüssigkeitseinlass (42), mit einem Flüssigkeitsauslass (43) und mit einer sich zum Flüssigkeitsauslass (43) hin verjüngenden Innenfläche (45),
wobei
die Flüssigkeitsdüse (38) zumindest eine Flüssigkeitsführungsrippe (47) aufweist, welche von der sich verjüngenden Innenfläche (45) der Flüssigkeitsdüse (38) nach innen in einen Schallraum vor dem Ultraschallprüfkopf (37) absteht, wobei die Flüssigkeitsdüse (38) mehrere Flüssigkeitsführungsrippen (47) an der sich verjüngenden Innenfläche (45) aufweist,
**dadurch gekennzeichnet, dass**
eine Höhe der Flüssigkeitsführungsrippen (47) in Richtung zum Flüssigkeitsauslass (43) hin abnimmt,
wobei innere Längskanten (48) der Flüssigkeitsführungsrippen (47) im Wesentlichen parallel zueinander verlaufen.

2. Ultraschall-Prüfvorrichtung nach Anspruch 1, **dadurch gekennzeichnet, dass** die Flüssigkeitsführungsrippe (47) von der sich verjüngenden Innenfläche (45) bis in einen Randbereich an einer Vorderseite des Ultraschallprüfkopfes (37) reicht, wobei ein Zentralbereich an der Vorderseite des Ultraschallprüfkopfes (37) frei von der Flüssigkeitsführungsrippe (47) ist.

3. Ultraschall-Prüfvorrichtung nach Anspruch 1 oder 2, **dadurch gekennzeichnet, dass** die inneren Längskanten (48) der Flüssigkeitsführungsrippen (47) in einem Abstand zueinander angeordnet sind, so dass die Flüssigkeitsdüse (38) einen von Flüssigkeitsführungsrippen (47) freien Zentralbereich aufweist.

4. Ultraschall-Prüfvorrichtung nach einem der Ansprüche 1 bis 3, **dadurch gekennzeichnet, dass** die Flüssigkeitsführungsrippen (47) in regelmäßigen Winkelabständen in Umfangsrichtung an der sich verjüngenden Innenfläche (45) der Flüssigkeitsdüse (38) angeordnet sind.

5. Ultraschall-Prüfvorrichtung nach einem der Ansprüche 1 bis 4, **dadurch gekennzeichnet, dass** die sich verjüngende Innenfläche (45) der Flüssigkeitsdüse (38) angrenzend an den Flüssigkeitsauslass (43) von Flüssigkeitsführungsrippen (47) frei ist.

6. Ultraschall-Prüfvorrichtung nach einem der Ansprüche 1 bis 5, **dadurch gekennzeichnet, dass** die Innenfläche (45) der Flüssigkeitsdüse (38) entsprechend eines Spline-Polynoms 3. bis 5. Grades verjüngt ist.

7. Ultraschall-Prüfvorrichtung nach einem der Ansprüche 1 bis 6, **dadurch gekennzeichnet, dass** die Flüssigkeitsdüse (38) eine axiale Erstreckung von kleiner als 60 mm von der Mitte des Ultraschallprüfkopfes (37) bis zum Flüssigkeitsauslass (43) aufweist.

8. Ultraschall-Prüfvorrichtung nach einem der Ansprüche 1 bis 7, **dadurch gekennzeichnet, dass** ein Antrieb zum Bewegen der Flüssigkeitsdüse (38), insbesondere zum Rotieren der Flüssigkeitsdüse (38) um ihre Längsachse und/oder eine senkrecht dazu verlaufende Querachse, vorgesehen ist.

9. Prüfanlage mit einem Handhabungselement (28), insbesondere mit einem Roboterarm, an welchem ein Werkzeug (30) mit einer Ultraschall-Prüfvorrichtung nach einem der Ansprüche 1 bis 8 angeordnet ist.

10. Verfahren zum zerstörungsfreien Prüfen eines Bauteils, insbesondere eines Faser-Kunststoff-Verbund-Bauteils, mit den Schritten:
Verwendung einer Ultraschall-Prüfvorrichtung nach einem der Ansprüche 1 bis 8 zur Durchführung folgender Verfahrensschritte:
Erzeugen von Ultraschallwellen mit dem Ultraschallprüfkopf (37),
Zuführen einer Flüssigkeitsströmung in die Flüssigkeitsdüse (38) über den Flüssigkeitseinlass,
Leiten der Flüssigkeitsströmung entlang der Innenfläche (45) der Flüssigkeitsdüse bis zum Flüssigkeitsauslass, wobei die Flüssigkeitsströmung mit Hilfe der Flüssigkeitsführungsrippen (47) geführt wird.

11. Verfahren nach Anspruch 10, **gekennzeichnet durch**:
Drehen der Flüssigkeitsdüse (38), insbesondere um ihre eigene Achse, während dem Leiten der Flüssigkeitsströmung entlang der Innenfläche (45) der Flüssigkeitsdüse (38) bis zum Flüssigkeitsauslass (43), so dass die Flüssigkeitsströmung über die Flüssigkeitsführungsrippe (47) bei der Drehbewegung mitgenommen wird.

## Claims

1. Ultrasonic testing device for non-destructively testing a component, in particular a fibre-reinforced plastic component, having:
an ultrasonic testing head (37),
a liquid nozzle (38) with a liquid inlet (42), a liquid outlet (43), and an inner surface (45) which tapers towards the liquid outlet (43),
wherein
the liquid nozzle (38) has at least one liquid-guiding rib (47) which protrudes inwards from the tapering inner surface (45) of the liquid nozzle (38) into a sound chamber in front of the ultrasonic probe (37), the liquid nozzle (38) having a plurality of liquid guide ribs (47) on the tapering inner surface (45),
**characterised in that**
a height of the liquid-guiding ribs (47) decreases in the direction towards the liquid outlet (43),
wherein inner longitudinal edges (48) of the liquid-guiding ribs (47) extend substantially parallel to each other.

2. Ultrasonic testing device according to claim 1, **characterised in that** the liquid-guiding rib (47) extends from the tapering inner surface (45) into an edge region on the front of the ultrasonic testing head (37), wherein a central region on the front of the ultrasonic testing head (37) is free of the liquid-guiding rib (47).

3. Ultrasonic testing device according to claims 1 or 2, **characterised in that** the inner longitudinal edges (48) of the liquid-guiding ribs (47) are arranged at a distance from one another, so that the liquid nozzle (38) has a central region free of liquid-guiding ribs (47).

4. Ultrasonic testing device according to claims 1 to 3, **characterised in that** the liquid-guiding ribs (47) are arranged at regular angular intervals in the circumferential direction on the tapering inner surface (45) of the liquid nozzle (38).

5. Ultrasonic testing device according to one of claims 1 to 4, **characterised in that** the tapering inner surface (45) of the liquid nozzle (38) adjacent to the liquid outlet (43) is free of liquid-guiding ribs (47).

6. Ultrasonic testing device according to any one of claims 1 to 5, c**characterised in that** the inner surface (45) of the liquid nozzle (38) is tapered according to a spline polynomial of degree 3 to 5.

7. Ultrasonic testing device according to one of claims 1 to 6, **characterised in that** the liquid nozzle (38) has an axial extent of less than 60 mm from the centre of the ultrasonic testing device (37) to the liquid outlet (43).

8. Ultrasonic testing device according to one of claims 1 to 7, **characterised in that** a drive is provided to move the liquid nozzle (38), in particular to rotate the liquid nozzle (38) about its longitudinal axis and/or a transverse axis running perpendicular thereto.

9. Testing system with a manipulation element (28), in particular with a robot arm, on which a tool (30) with an ultrasonic testing device according to one of claims 1 to 8 is arranged.

10. Method for non-destructive testing of a component, in particular of a fibre-reinforced plastic component, comprising the steps of:
Use of an ultrasonic testing device according to one of claims 1 to 8 for carrying out the following method steps:
generating ultrasonic waves using the ultrasonic testing head (37),
supplying a liquid flow into the liquid nozzle (38) via the liquid inlet,
conducting the liquid flow along the inner surface (45) of the liquid nozzle to the liquid outlet, wherein the liquid flow is guided with the aid of the liquid-guiding rib (47).

11. Method according to claim 10, **characterised by**:
rotating the liquid nozzle (38), in particular about its own axis, while the liquid flow is conducted along the inner surface (45) of the liquid nozzle (38) to the liquid outlet (43), so that the liquid flow is carried over the liquid-guiding rib (47) during the rotary movement.

## Revendications

1. Dispositif d'essai par ultrasons pour l'inspection non destructive d'un composant, en particulier d'un composant composite fibres-plastique, comprenant :
une tête de contrôle par ultrasons (37),
une buse de liquide (38) avec une entrée de liquide (42), une sortie de liquide (43) et une surface intérieure (45) se rétrécissant vers la sortie de liquide (43),
dans lequel
la buse de liquide (38) comprend au moins une nervure de guidage de liquide (47) qui fait saillie vers l'intérieur depuis la surface intérieure rétrécie (45) de la buse de liquide (38) dans une chambre acoustique devant la tête de contrôle par ultrasons (37), la buse de liquide (38) comprenant plusieurs nervures de guidage de liquide (47) sur la surface intérieure rétrécie (45),
**caractérisé en ce que**
une hauteur des nervures de guidage de liquide (47) diminue en direction de la sortie de liquide (43),
les arêtes longitudinales intérieures (48) des nervures de guidage de liquide (47) s'étendant sensiblement parallèlement les unes aux autres.

2. Dispositif d'essai par ultrasons selon la revendication 1, **caractérisé en ce que** la nervure de guidage de liquide (47) s'étend depuis la surface intérieure rétrécie (45) jusqu'à une zone périphérique sur une face avant de la tête de contrôle par ultrasons (37), une zone centrale sur la face avant de la tête de contrôle par à ultrasons (37) étant exempte de la nervure de guidage de liquide (47).

3. Dispositif d'essai par ultrasons selon la revendication 1 ou 2, **caractérisé en ce que** les arêtes longitudinales intérieures (48) des nervures de guidage de liquide (47) sont disposées à distance les unes des autres, de sorte que la buse de liquide (38) présente une zone centrale exempte de nervures de guidage de liquide (47).

4. Dispositif d'essai par ultrasons selon l'une des revendications 1 à 3, **caractérisé en ce que** les nervures de guidage de liquide (47) sont disposées à des intervalles angulaires réguliers dans la direction circonférentielle sur la surface intérieure rétrécie (45) de la buse de liquide (38).

5. Dispositif d'essai par ultrasons selon l'une des revendications 1 à 4, **caractérisé en ce que** la surface intérieure rétrécie (45) de la buse de liquide (38) adjacente à la sortie de liquide (43) est exempte de nervures de guidage de liquide (47).

6. Dispositif d'essai par ultrasons selon l'une des revendications 1 à 5, **caractérisé en ce que** la surface intérieure (45) de la buse de liquide (38) est rétrécie selon un polynôme spline de 3ème à 5ème degré.

7. Dispositif d'essai par ultrasons selon l'une des revendications 1 à 6, **caractérisé en ce que** la buse de liquide (38) présente une extension axiale inférieure à 60 mm du centre de la tête de contrôle par ultrasons (37) jusqu'à la sortie de liquide (43).

8. Dispositif d'essai par ultrasons selon l'une des revendications 1 à 7, **caractérisé en ce qu'**un entraînement est prévu pour déplacer la buse de liquide (38), en particulier pour faire tourner la buse de liquide (38) autour de son axe longitudinal et/ou d'un axe transversal perpendiculaire à celui-ci.

9. Installation d'essai comprenant un élément de manipulation (28), en particulier un bras robotique, sur lequel est disposé un outil (30) avec un dispositif d'essai par ultrasons selon l'une des revendications 1 à 8.

10. Procédé d'inspection non destructive d'un composant, en particulier d'un composant composite fibres-plastique, comprenant les étapes suivantes :
Utilisation d'un dispositif d'essai par ultrasons selon l'une des revendications 1 à 8 pour effectuer les étapes de procédé suivantes :
Génération d'ondes ultrasonores avec la tête de contrôle par ultrasons (37),
Alimentation d'un flux de liquide dans la buse de liquide (38) via l'entrée de liquide,
Guidage du flux de liquide le long de la surface intérieure (45) de la buse de liquide jusqu'à la sortie de liquide, le flux de liquide étant guidé à l'aide des nervures de guidage de liquide (47).

11. Procédé selon la revendication 10, **caractérisé par**:
Rotation de la buse de liquide (38), en particulier autour de son propre axe, pendant le guidage du flux de liquide le long de la surface intérieure (45) de la buse de liquide (38) jusqu'à la sortie de liquide (43), de sorte que le flux de liquide est entraîné par la nervure de guidage de liquide (47) lors du mouvement de rotation.
